# EUROPEAN PATENT APPLICATION

(11) **EP 4 790 466 A1**
(43) Date of publication of application: **12.08.2026**
(21) Application number: 24874662.0
(22) Date of filing: 03.10.2024
(51) Int. Cl.: G02B 6/40, G02B 6/38

(54) **OPTICAL CONNECTOR, OPTICAL CONNECTION ASSEMBLY, AND METHOD FOR MANUFACTURING OPTICAL CONNECTOR**

(30) Priority: 06.10.2023 JP 2023174446
(71) Applicant: Sumitomo Electric Industries, Ltd., Osaka-shi, Osaka 541-0041 (JP)
(72) Inventor: MORISHIMA, Tetsu, Osaka-shi, Osaka 541-0041 (JP)
(74) Representative: TBK
(86) International application number: PCT/JP2024/035355
(87) International publication number: WO 2025/075062

(57) **Abstract**

An optical connector according to the present disclosure comprises: an optical connector ferrule that has a ferrule end surface and at least one through-hole extending from the ferrule end surface; a tip surface that is exposed at the ferrule end surface; and at least one optical waveguide member that includes a plurality of cores exposed at the tip surface and is held by the optical connector ferrule in a state of being inserted into the through-hole. The ferrule end surface has a shape having a first center line and a second center line. The cores are disposed at positions deviated from the central axis of the optical waveguide member, and include at least an outermost core that is disposed at a position farthest from the central axis. When a first straight line passing through the central axis and parallel to the first center line is drawn in the tip surface, the center of the outermost core is disposed at a position deviated from the first straight line.

## Description

### TECHNICAL FIELD

The present disclosure relates to an optical connector, an optical connection assembly, and a method of manufacturing an optical connector. This application claims priority based on Japanese Patent Application No. 2023-174446 filed on October 6, 2023, and the entire contents of which are incorporated herein by reference.

### BACKGROUND ART

For example, Patent Literature 1 discloses an optical connector for connecting multi-core optical fibers to each other. As a method of connecting multi-core optical fibers to each other, a physical contact (PC) method is generally known. In the PC method, a fiber end face of an optical connector is physically brought into contact with a fiber end face of a connection counterpart optical connector and pressed, thereby optically coupling the optical fibers to each other.

### CITATION LIST

### PATENT LITERATURE

Patent literature 1: Japanese Unexamined Patent Application Publication No. H9-68627

### SUMMARY OF INVENTION

An optical connector of the present disclosure includes an optical connector ferrule including a ferrule end surface and at least one through hole extending from the ferrule end surface, and at least one optical waveguide member including a distal end surface exposed at the ferrule end surface and a plurality of cores exposed at the distal end surface, the at least one optical waveguide member being held by the optical connector ferrule in a state of being inserted into the at least one through hole. The ferrule end surface has a shape having a first center line and a second center line that has a length shorter than a length of the first center line. Each of the plurality of cores is disposed at a position shifted from a center axis of the optical waveguide member. The plurality of cores includes an outermost core disposed at a position farthest from the center axis. On the distal end surface, a center of the outermost core is disposed at a position shifted from a first straight line when the first straight line passing through the center axis and parallel to the first center line is drawn.

### BRIEF DESCRIPTION OF THE DRAWINGS

[FIG. 1] FIG. 1 is a cross-sectional view showing an optical connection assembly according to an embodiment.
[FIG. 2] FIG. 2 is a perspective view showing an optical connector included in the optical connection assembly of FIG. 1.
[FIG. 3] FIG. 3 is a front view showing the optical connector of FIG. 2.
[FIG. 4] FIG. 4 is a flowchart showing an example of a manufacturing process of the optical connector of FIG. 2.
[FIG. 5A] FIG. 5A is a cross-sectional view for explaining effects of an optical connector.
[FIG. 5B] FIG. 5B is a cross-sectional view for explaining effects of an optical connector.
[FIG. 6] FIG. 6 is a cross-sectional view showing a portion A of FIG. 5B in an enlarged manner.
[FIG. 7] FIG. 7 is a front view showing an optical connector according to a modification.
[FIG. 8] FIG. 8 is a front view showing an optical connector according to a comparative example.
[FIG. 9A] FIG. 9A is a cross-sectional view for explaining an issue of the optical connector of FIG. 8.
[FIG. 9B] FIG. 9B is a cross-sectional view for explaining an issue of the optical connector of FIG. 8.
[FIG. 10] FIG. 10 is a cross-sectional view showing a portion B of FIG. 9B in an enlarged manner.

### DETAILED DESCRIPTION

### [Problems to be Solved by Present Disclosure]

When manufacturing the optical connector as described above, in order to PC-connect optical fibers to each other, polishing may be performed on a ferrule end surface in a state in which an optical fiber is mounted in a ferrule. By performing this polishing, it is possible to remove a scratch on the fiber end face and adjust inclination of the ferrule end surface. When such polishing is performed, the ferrule end surface and the fiber end face polished simultaneously with the ferrule end surface may be greatly shifted from ideal positions due to polishing errors. In this case, when the optical connector is connected to the connection counterpart optical connector, a gap is likely to be generated between the fiber end faces, and it may be difficult to bring the fiber end faces into direct contact with each other. As a result, connection loss between the optical connectors may increase.

The present disclosure provides an optical connector, an optical connection assembly, and a method of manufacturing an optical connector that can reduce an increase in connection loss.

### [Advantageous Effects of Present Disclosure]

According to an optical connector, an optical connection assembly, and a method of manufacturing an optical connector of the present disclosure, an increase in connection loss can be reduced.

### [Description of Embodiments of Present Disclosure]

First, the contents of the embodiments of the present disclosure will be listed and described.
(1) An optical connector of the present disclosure includes an optical connector ferrule including a ferrule end surface and at least one through hole extending from the ferrule end surface, and at least one optical waveguide member including a distal end surface exposed at the ferrule end surface and a plurality of cores exposed at the distal end surface, the at least one optical waveguide member being held by the optical connector ferrule in a state of being inserted into the at least one through hole. The ferrule end surface has a shape having a first center line and a second center line that has a length shorter than a length of the first center line. Each of the plurality of cores is disposed at a position shifted from a center axis of the optical waveguide member. The plurality of cores includes an outermost core disposed at a position farthest from the center axis. On the distal end surface, a center of the outermost core is disposed at a position shifted from a first straight line when the first straight line passing through the center axis and parallel to the first center line is drawn.
   When the optical connector is manufactured, when polishing is performed on the ferrule end surface and the distal end surface of the optical waveguide member, since a proceed range in a longitudinal direction along the first center line of the ferrule end surface is larger than the proceed range in a lateral direction along the second center line of the ferrule end surface, error in the amount of polishing (polishing error) is likely to increase at a position along the longitudinal direction of the ferrule end surface. Such a polishing error may cause a large gap between the ferrule end surfaces at the position along the longitudinal direction of the ferrule end surface when the optical connector is connected to a connection counterpart optical connector. In a position where a large gap is generated, it may be difficult to bring the core of the optical waveguide member exposed at the ferrule end surface into direct contact with the core of the optical waveguide member exposed at a connection counterpart ferrule end surface. In order to make it easy for these cores to come into direct contact with each other, it is effective to avoid disposing the core of the optical waveguide member at the position along the longitudinal direction of the ferrule end surface, that is, the position that is likely to be affected by the polishing error. Since the outermost core disposed at the position farthest from the center axis of the optical waveguide member is likely to be greatly shifted from an ideal position due to an influence of the polishing error, it is important to avoid disposing the outermost core at the position along the longitudinal direction of the ferrule end surface. Thus, in the above optical connector, when the ferrule end surface is viewed along the axial direction, that is, on the distal end surface, the center of the outermost core of the optical waveguide member is disposed at the position shifted from the first straight line when the first straight line passing through the center axis of the optical waveguide member and parallel to the first center line is drawn. That is, the outermost core is not disposed at the position along the longitudinal direction of the ferrule end surface. Thus, even when the polishing error occurs, it is possible to reduce difficulty in directly contacting the cores when connecting the optical connector to the connection counterpart optical connector. As a result, an increase in connection loss between the optical connectors can be reduced.
(2) In the optical connector according to the above (1), the at least one optical waveguide member may include a plurality of optical waveguide members, each of the plurality of optical waveguide members having the distal end surface arranged along the first straight line. The at least one through hole may include a plurality of through holes, and the optical connector ferrule may include the plurality of through holes into which the plurality of optical waveguide members is inserted. In this manner, when the plurality of optical waveguide members are arranged along the first straight line, the cores of the optical waveguide members are likely to be disposed on the first straight line that is likely to be affected by the polishing error. In contrast, in the above optical connector, as described above, the outermost core of the optical waveguide member is disposed at the position shifted from the first straight line, and thus the above-described effect can be effectively achieved.
(3) In the optical connector according to the above (1) or (2), the at least one optical waveguide member may be a multi-core fiber including the plurality of cores. In this case, the cores of the optical waveguide member are likely to be disposed on the first straight line that is likely to be affected by the polishing error. In contrast, in the optical connector, as described above, the outermost core of the optical waveguide member is disposed at the position shifted from the first straight line, and thus the above-described effect can be effectively achieved.
(4) In the optical connector according to the above (3), on the distal end surface, centers of all the cores of the at least one optical waveguide member may be disposed at positions shifted from the first straight line. In this case, all the cores including the outermost core can be disposed at positions shifted from the first straight line that is likely to be affected by the polishing error. Thus, even when the polishing error occurs, it is possible to more effectively reduce the difficulty in directly contacting the cores when the optical connector is connected to the connection counterpart optical connector. As a result, it is possible to more effectively reduce an increase in connection loss between the optical connectors.
(5) In the optical connector according to the above (4), on the distal end surface, all the cores of the at least one optical waveguide member may be arranged point-symmetrically with respect to the center axis. If the cores of the optical waveguide member are arranged asymmetrically with respect to the center axis, when a rotational position of the optical waveguide member is adjusted such that the outermost core is disposed at the position shifted from the first straight line, it is assumed that another core on the opposite side of the outermost core is extremely close to the first straight line that is likely to be affected by the polishing error. In contrast, with the configuration in the above (5), it is possible to reduce the possibility that another core on the opposite side of the outermost core is extremely close to the first straight line when the rotational position of the optical waveguide member is adjusted. Thus, even when the polishing error occurs, it is possible to more effectively reduce the difficulty in bringing the cores into direct contact with each other when the optical connector is connected to the connection counterpart optical connector. As a result, it is possible to more effectively reduce an increase in connection loss between the optical connectors.
(6) In the optical connector according to any one of the above (1) to (5), on the distal end surface, the center of the outermost core may be disposed at a position closer to a second straight line than to the first straight line in a rotation direction about the center axis as a center when the second straight line passing through the center axis and parallel to the second center line is drawn. In this case, the outermost core can be disposed at a position that is not unlikely to be affected by the polishing error, and thus, the cores can be easily brought into direct contact with each other when the optical connector is connected to the connection counterpart optical connector. As a result, it is possible to more effectively reduce an increase in connection loss between the optical connectors.
(7) An optical connection assembly of the present disclosure may include a first optical connector and a second optical connector, each being the optical connector according to any one of the above (1) to (6). The ferrule end surface of the first optical connector may face the ferrule end surface of the second optical connector in a direction in which the center axis extends. Since the optical connection assembly includes the first optical connector and the second optical connector, each being any one of the optical connectors described above, the optical connection assembly can effectively achieve the above-described effect of reducing an increase in connection loss between the optical connectors.
(8) A method of manufacturing an optical connector of the present disclosure includes: preparing an optical connector ferrule including a ferrule end surface and at least one through hole extending from the ferrule end surface, and preparing an optical waveguide member including a distal end surface and a plurality of cores exposed at the distal end surface; inserting the optical waveguide member into the at least one through hole such that the distal end surface is exposed from the ferrule end surface; adjusting a rotational position of the optical waveguide member around a center axis after the optical waveguide member is inserted into the at least one through hole; and polishing the ferrule end surface and the distal end surface after the rotational position of the optical waveguide member is determined. The ferrule end surface has a shape having a first center line and a second center line that has a length shorter than a length of the first center line. Each of the plurality of cores is disposed at a position shifted from the center axis of the optical waveguide member. The plurality of cores includes at least one outermost core disposed at a position farthest from the center axis. In the adjusting the rotational position of the optical waveguide member, on the distal end surface, the rotational position of the optical waveguide member around the center axis is determined such that a center of the outermost core is disposed at a position shifted from a first straight line when the first straight line passing through the center axis and parallel to the first center line is drawn.

In the above-described method of manufacturing the optical connector, when polishing the ferrule end surface and the distal end surface of the optical waveguide member after the rotational position of the optical waveguide member is determined, since the proceed range in the longitudinal direction along the first center line of the ferrule end surface is larger than the proceed range in the lateral direction along the second center line of the ferrule end surface, error in the amount of polishing (polishing error) is likely to increase at the position along the longitudinal direction of the ferrule end surface. Such a polishing error may cause a large gap between the ferrule end surfaces at the position along the longitudinal direction of the ferrule end surface when the optical connector is connected to the connection counterpart optical connector. In a position where a large gap is generated, it may be difficult to bring the core of the optical waveguide member exposed at the ferrule end surface into direct contact with the core of the optical waveguide member exposed at the connection counterpart ferrule end surface. In order to make it easy for these cores to come into direct contact with each other, it is effective to avoid disposing the core of the optical waveguide member at the position along the longitudinal direction of the ferrule end surface, that is, the position that is likely to be affected by the polishing error. Since the outermost core disposed at the position farthest from the center axis of the optical waveguide member is likely to be greatly shifted from the ideal position due to the influence of the polishing error, it is important to avoid disposing the outermost core at the position along the longitudinal direction of the ferrule end surface. Thus, in the above-described method of manufacturing the optical connector, when adjusting the rotational position of the optical waveguide member, when the ferrule end surface is viewed along the axial direction in which the center axis extends, that is, on the distal end surface, the rotational position of the optical waveguide member around the center axis is determined such that the center of the outermost core is disposed at the position shifted from the first straight line when the first straight line passing through the center axis and parallel to the first center line is drawn. That is, the rotational position of the optical waveguide member is determined such that the outermost core is not disposed at the position along the longitudinal direction of the ferrule end surface. Thus, even when the polishing error occurs, it is possible to reduce the difficulty in directly contacting the cores when connecting the optical connector to the connection counterpart optical connector. As a result, an increase in connection loss between the optical connectors can be reduced.

### [Details of Embodiments of Present Disclosure]

Specific examples of an optical connector, an optical connection assembly, and a method of manufacturing an optical connector of the present disclosure will be described in detail below with reference to the accompanying drawings. The present invention is not limited to these examples, but is defined by the scope of the claims, and is intended to include all modifications within the meaning and scope equivalent to the scope of the claims. In the description of the drawings, the same elements are denoted by the same reference numerals, and redundant description will be omitted as appropriate.

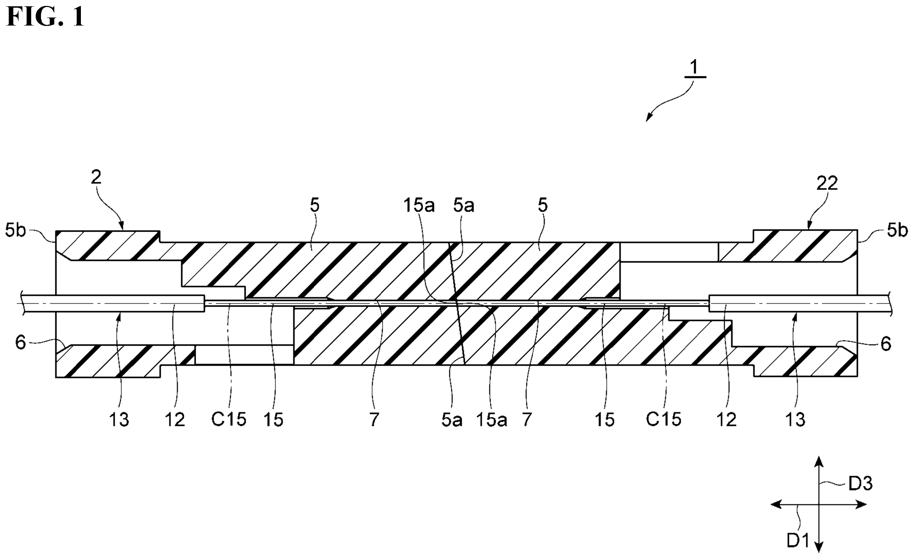

FIG. 1 is a cross-sectional view showing an optical connection assembly 1 according to an embodiment. As shown in FIG. 1, the optical connection assembly 1 includes, for example, an optical connector 2 (first optical connector) and a connection counterpart optical connector 22 (second optical connector). The optical connector 2 and the optical connector 22 have, for example, the same shape as each other. The optical connector 2 and the optical connector 22 face each other along an axial direction D1, for example, in a state where the optical connector 22 is vertically inverted with respect to the optical connector 2. The axial direction D1 is a direction in which a center axis C15 of an optical fiber 15 described later extends, and is a connection direction of the optical connector 2 and the optical connector 22. The optical connector 2 and the optical connector 22 are butted against each other and are PC-connected along the axial direction D1. Thus, the optical connector 2 and the optical connector 22 are optically coupled to each other.

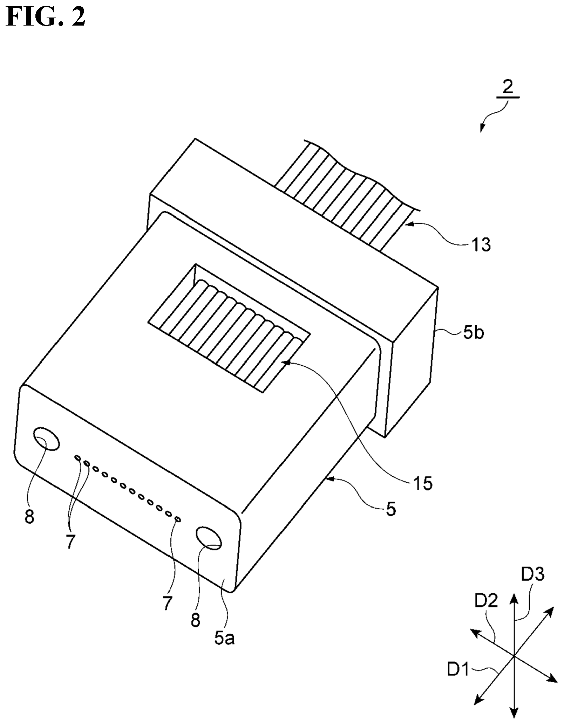

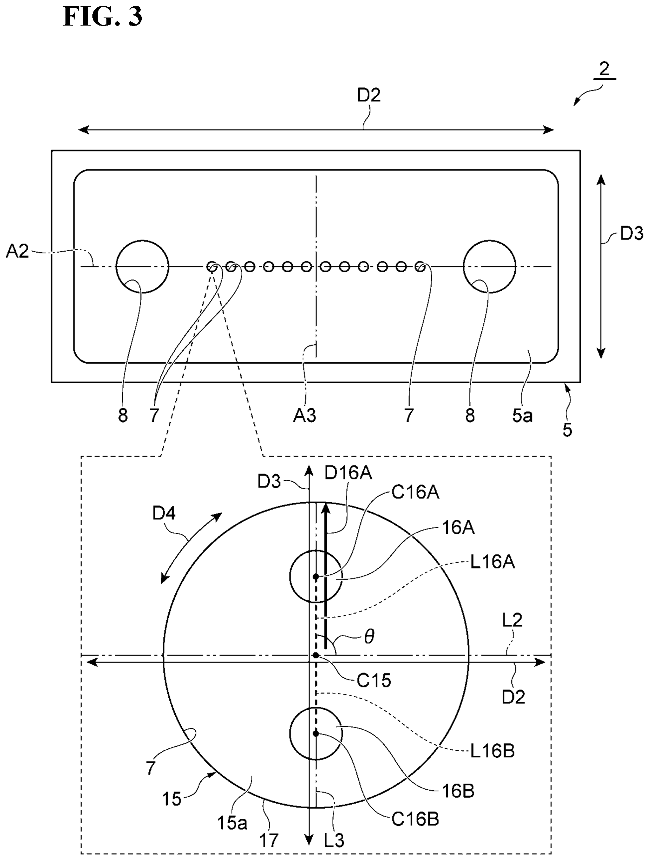

FIG. 2 is a perspective view showing the optical connector 2. FIG. 3 is a front view showing the optical connector 2. As shown in FIG. 2, the optical connector 2 includes, for example, a ferrule 5 (optical connector ferrule) and a plurality of optical fibers 15 (optical waveguide members). The ferrule 5 has a substantially rectangular parallelepiped shape in external appearance and is formed of, for example, a resin. The ferrule 5 is, for example, an MT ferrule. The ferrule 5 includes, for example, a ferrule end surface 5a provided at a first end in the axial direction D1 and a rear end surface 5b provided at a second end in the axial direction D1. In the optical connection assembly 1 of FIG. 1, the ferrule end surface 5a faces the ferrule end surface 5a of the connection counterpart optical connector 22 in the axial direction D1. The ferrule end surface 5a may be in contact with a connection counterpart ferrule end surface 5a or may be separated from the connection counterpart ferrule end surface 5a. The rear end surface 5b is formed with an introduction opening 6 (see FIG. 1) for receiving the plurality of optical fibers 15.

As shown in FIG. 3, the ferrule end surface 5a viewed along the axial direction D1 has a shape having a major axis (first center line) A2 and a minor axis (second center line) A3, for example, when an ellipse inscribed in an outer shape of the ferrule end surface 5a is defined. The first center line A2 is a line segment (symmetric axis) passing through the center of the ferrule end surface 5a and extending along a longitudinal direction D2 of the ferrule end surface 5a. The second center line A3 is a line segment (symmetric axis) passing through the center of the ferrule end surface 5a and extending along a lateral direction D3 of the ferrule end surface 5a. A length of the first center line A2 is longer than a length of the second center line A3. Thus, a length of the ferrule end surface 5a along the longitudinal direction D2 in which the first center line A2 extends is longer than a length of the ferrule end surface 5a along the lateral direction D3 in which the second center line A3 extends. The second center line A3 has a length shorter than the length of the first center line A2. For example, the ferrule end surface 5a has a rectangular shape extending long along the longitudinal direction D2. A long side of the ferrule end surface 5a extends along the longitudinal direction D2, and a short side of the ferrule end surface 5a extends along the lateral direction D3. The longitudinal direction D2 and the lateral direction D3 are directions intersecting (for example, orthogonal to) the axial direction D1. The longitudinal direction D2 intersects (for example, is orthogonal to) the lateral direction D3.

The ferrule 5 further includes a plurality of through holes 7 and a pair of guiding holes 8. As shown in FIG. 1, each of the optical fibers 15 is inserted into a respective one of the through holes 7. Each of the through holes 7 is an optical fiber holding hole for holding the inserted optical fiber 15. The plurality of through holes 7 extend from the ferrule end surface 5a toward the introduction opening 6 along the axial direction D1. A front end of each through hole 7 is opened at the ferrule end surface 5a. A direction in which a center axis of each through hole 7 extends coincides with the axial direction D1. The openings of the through holes 7 are arranged in a row along the longitudinal direction D2 on the ferrule end surface 5a.

As shown in FIG. 2, the guiding holes 8 are arranged along the longitudinal direction D2, and are formed at a pair of positions sandwiching the plurality of through holes 7 (in other words, at both ends of the row of the through holes 7). The guiding holes 8 penetrate the ferrule 5 in the axial direction D1. A pair of guiding pins are inserted into the guiding holes 8. The pair of guiding pins are inserted into a pair of guiding holes of the connection counterpart optical connector 22 (see FIG. 1) in a state of being inserted into the guiding holes 8. As a result, a relative position between the optical connector 2 and the connection counterpart optical connector 22 is fixed.

The plurality of optical fibers 15 extend along the axial direction D1 and are arranged along the longitudinal direction D2, corresponding to the through holes 7 of the ferrule 5. In one example, twelve optical fibers 15 are arranged in a row along the longitudinal direction D2. Each of the optical fibers 15 is inserted into a respective one of the through holes 7 in the axial direction D1. The arrangement and the number of the plurality of optical fibers 15 can be changed as appropriate according to required specifications. For example, two fiber rows in each of which twelve optical fibers 15 are arranged in the longitudinal direction D2 may be arranged along the lateral direction D3. The number of optical fibers 15 is not limited to twelve, and may be other numbers.

The optical fibers 15 are covered with an outer sheath 12 made of resin, thereby forming an optical fiber core wire 13. The outer sheath 12 is removed from the optical fiber core wire 13 from the middle portion to the tip end in the axial direction D1, and the optical fiber 15 is exposed from the outer sheath 12. Each of the optical fibers 15 is fixed to the ferrule 5 with an adhesive injected into the ferrule 5 in a state in which each of the optical fibers 15 is inserted into a respective one of the through holes 7 of the ferrule 5. In a state in which each of the optical fibers 15 is inserted into a respective one of the through holes 7, a fiber end face 15a (distal end surface) of each of the optical fibers 15 is exposed to an opening of a respective one of the through holes 7 formed in the ferrule end surface 5a.

In a state in which each of the optical fibers 15 is inserted into a respective one of the through holes 7 of the ferrule 5, for example, the ferrule end surface 5a is subjected to angled polishing. In the angled polishing, the polishing is performed on the ferrule end surface 5a such that the ferrule end surface 5a is inclined (for example, 8 degrees) with respect to a plane perpendicular to the axial direction D1. As a result, the ferrule end surface 5a is inclined with respect to the plane perpendicular to the axial direction D1. As shown in FIG. 1, the ferrule end surface 5a is inclined from a direction perpendicular to the center axis C15 in a cross section including the center axis C15. More specifically, the ferrule end surface 5a extends in a direction inclined with respect to the lateral direction D3 perpendicular to the axial direction D1 in a cross section passing through the center axis C15 and extending along the lateral direction D3 and the axial direction D1.

With this configuration, the fiber end face 15a of each of the optical fibers 15 polished simultaneously with the ferrule end surface 5a is also inclined with respect to the plane perpendicular to the axial direction D1, similarly to the ferrule end surface 5a. That is, each of the fiber end faces 15a extends so as to be inclined with respect to the lateral direction D3 perpendicular to the axial direction D1 in the cross section passing through the center axis C15 and extending along the lateral direction D3 and the axial direction D1. Each of the fiber end faces 15a may protrude with respect to the ferrule end surface 5a in the axial direction D1, or may be a surface aligned with the ferrule end surface 5a without a step, for example.

In a state in which each of the optical fibers 15 is inserted into a respective one of the through holes 7 of the ferrule 5, the ferrule end surface 5a may be subjected to right-angled polishing. In the right-angled polishing, the ferrule end surface 5a is polished so that the ferrule end surface 5a is perpendicular to the axial direction D1. As a result, both the ferrule end surface 5a and each of the fiber end faces 15a are perpendicular to the axial direction D1.

As shown in FIG. 3, each optical fiber 15 is a multi-core fiber including, for example, two (a plurality of) cores 16A, 16B and a cladding 17 surrounding the cores 16A, 16B. The cores 16A, 16B have a refractive index higher than a refractive index of the cladding. The cores 16A, 16B are exposed at the fiber end face 15a and are arranged adjacent to each other on the fiber end face 15a. The number of cores included in the optical fiber 15 is not limited to two, and may be other numbers such as four, six, or eight or more.

The cores 16A, 16B are disposed, for example, at positions shifted from the center axis C15 of the optical fiber 15 when the fiber end face 15a is viewed along the axial direction D1, that is, on the fiber end face 15a. The cores 16A, 16B are disposed at a pair of positions sandwiching the center axis C15 on the fiber end face 15a, for example. A distance between the center axis C15 and a center C16A of the core 16A is equal to a distance between the center axis C15 and a center C16B of the core 16B. Thus, the cores 16A, 16B are arranged line-symmetrically with respect to the center axis C15. It can also be said that the cores 16A, 16B are arranged point-symmetrically with respect to the center axis C15.

At least one of the cores 16A, 16B corresponds to an "outermost core" farthest from the center axis C15. The "outermost core" farthest from the center axis C15 means a core disposed at a position farthest from the center axis C15 among the cores 16A, 16B when the fiber end face 15a is viewed along the axial direction D1, that is, on the fiber end face 15a. When the two cores 16A, 16B are arranged point-symmetrically with respect to the center axis C15 as in the embodiment, the cores 16A, 16B are arranged at equal distances from the center axis C15. In this case, one of the two cores 16A, 16B may be defined as the "outermost core". In the embodiment, for convenience, the core 16A is defined as the "outermost core", and the "core 16A" is replaced with the "outermost core 16A" in the following description as necessary.

From the viewpoint of clarifying the corresponding relationship between the two cores 16A, 16B and two cores 16A, 16B included in the connection counterpart optical connector 22, the first core of the two cores 16A, 16B may be disposed so as to be intentionally shifted from the position symmetrical with respect to the second core. As a result, the first core may be disposed at a position farther from the center axis C15 than the second core. In this case, only the first core corresponds to the "outermost core". For example, when the core 16B is disposed at the position farther from the center axis C15 than the core 16A, the core 16B corresponds to the "outermost core".

In the embodiment, as shown in FIG. 3, when the ferrule end surface 5a is viewed along the axial direction D1, that is, on the fiber end face 15a, the center C16A of the outermost core 16A is disposed at a position shifted from a first straight line L2 when the first straight line L2 passing through the center axis C15 and parallel to the longitudinal direction D2 is drawn. The center C16A of the outermost core 16A being shifted from the first straight line L2 means that, when the ferrule end surface 5a is viewed in the axial direction D1, the center C16A of the outermost core 16A is disposed at a position away from the first straight line L2 without overlapping the first straight line L2. Thus, when the ferrule end surface 5a is viewed along the axial direction D1, when a straight line L16A connecting the center axis C15 and the center C16A of the outermost core 16A is drawn, the straight line L16A represented by a dotted line does not coincide with the first straight line L2, but intersects the first straight line L2. That is, when a direction in which the straight line L16A extends is defined as an outermost core direction D16A, the outermost core direction D16A is not parallel to the longitudinal direction D2 but intersects the longitudinal direction D2.

When the ferrule end surface 5a is viewed along the axial direction D1, that is, on the fiber end face 15a, the center C16A of the outermost core 16A is disposed at a position closer to a second straight line L3 than to the first straight line L2 in a rotation direction D4 about the center axis C15 as a center when the second straight line L3 passing through the center axis C15 and parallel to the lateral direction D3 is drawn. In other words, when an angle of the straight line L16A around the center axis C15 with respect to the first straight line L2 is defined as a rotation angle θ, the rotation angle θ is set to a range of, for example, more than 45 degrees and equal to or less than 90 degrees. In the example shown in FIG. 3, the center C16A of the outermost core 16A is disposed on the second straight line L3. In this case, the straight line L16A connecting the center axis C15 and the center C16A of the outermost core 16A coincides with the second straight line L3 and is perpendicular to the first straight line L2. That is, the rotation angle θ of the straight line L16A is 90 degrees. The outermost core direction D16A along the straight line L16A is perpendicular to the longitudinal direction D2 and parallel to the lateral direction D3.

In the embodiment, when the ferrule end surface 5a is viewed along the axial direction D1, that is, on the fiber end face 15a, the centers C16A, C16B of all the cores 16A, 16B of the optical fiber 15 including the outermost core 16A are disposed at positions shifted from the first straight line L2. Thus, when the ferrule end surface 5a is viewed along the axial direction D1, when a straight line L16B connecting the center axis C15 and the center C16B of the core 16B is drawn, the straight line L16B does not coincide with the first straight line L2 and intersects the first straight line L2, similarly to the straight line L16A. Specifically, the straight line L16B coincides with the second straight line L3 and is perpendicular to the first straight line L2, similarly to the straight line L16A.

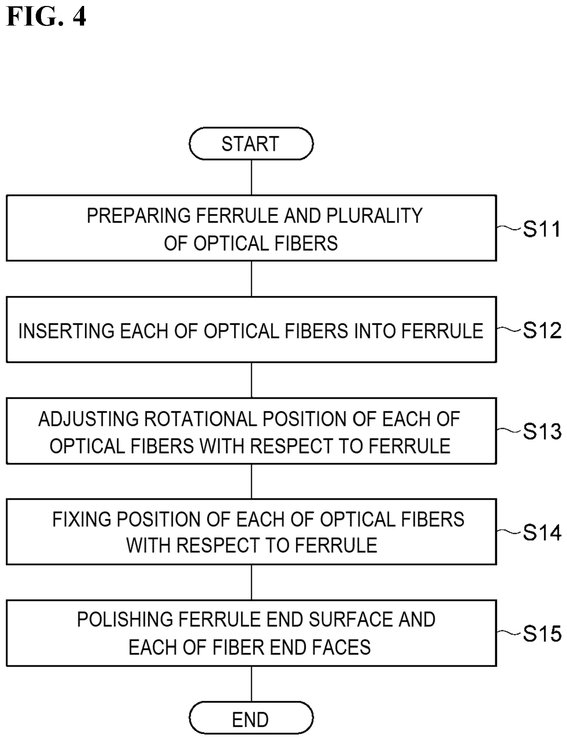

Next, a method of manufacturing the optical connector 2 described above will be described with reference to FIG. 4. FIG. 4 is a flowchart showing a manufacturing process of the optical connector 2.

First, as shown in FIG. 4, the ferrule 5 and the plurality of optical fibers 15 are prepared (step S11). The ferrule 5 includes, for example, the plurality of through holes 7 extending from the ferrule end surface 5a in the axial direction D1 and arranged along the longitudinal direction D2. Each of the optical fibers 15 includes, for example, the two cores 16A, 16B. The two cores 16A, 16B are arranged, for example, line-symmetrically with respect to the center axis C15. Here, for convenience, the "core 16A" is defined as the "outermost core 16A" farthest from the center axis C15.

Next, each optical fiber 15 is inserted into the ferrule 5 (step S12). For example, each of the optical fibers 15 is inserted into a respective one of the through holes 7 of the ferrule 5 in the axial direction D1, and the fiber end face 15a of each of the optical fibers 15 is exposed at the ferrule end surface 5a. Each of the fiber end faces 15a slightly protrudes in the axial direction D1 with respect to the ferrule end surface 5a, for example.

Next, the rotational position of each of the optical fibers 15 with respect to the ferrule 5 is adjusted (step S13). At this time, when the ferrule end surface 5a is viewed along the axial direction D1, the rotational position of each of the optical fibers 15 around the center axis C15 is determined such that the center C16A of the outermost core 16A is disposed at a position shifted from the first straight line L2 when the first straight line L2 passing through the center axis C15 of the optical fiber 15 and parallel to the first center line A2 of the ferrule end surface 5a is drawn. As a result, when the ferrule end surface 5a is viewed along the axial direction D1, that is, on the fiber end face 15a, the center C16A of the outermost core 16A is disposed on the second straight line L3 when the second straight line L3 passing through the center axis C15 of the optical fiber 15 and parallel to the second center line A3 of the ferrule end surface 5a is drawn. The center C16B of the core 16B on the opposite side of the outermost core 16A is disposed at a position on the second straight line L3 on the opposite side of the outermost core 16A with the center axis C15 interposed therebetween.

Next, the position of each of the optical fibers 15 with respect to the ferrule 5 is fixed (step S14). For example, after the rotational position of each of the optical fibers 15 with respect to the ferrule 5 is determined, an adhesive is introduced into the ferrule 5. As the adhesive, for example, an adhesive having a high viscosity to the extent that the adhesive does not flow out from each of the through holes 7 inside the ferrule 5 to the ferrule end surface 5a is used. Each of the optical fibers 15 is fixed to the ferrule 5 by curing the adhesive inside the ferrule 5.

Next, the ferrule end surface 5a and each of the fiber end faces 15a are polished (step S15). For example, after the rotational position of each of the optical fibers 15 with respect to the ferrule 5 is determined, the ferrule end surface 5a and each of the fiber end faces 15a exposed at the ferrule end surface 5a are subjected to the angled polishing. As a result, the ferrule end surface 5a and each of the fiber end faces 15a are inclined with respect to the plane perpendicular to the axial direction D1. For example, as shown in FIG. 1, the ferrule end surface 5a and each of the fiber end faces 15a are inclined with respect to the lateral direction D3 in the cross section extending along the lateral direction D3 and the axial direction D1. The ferrule end surface 5a and each of the fiber end faces 15a may be subjected to the right-angled polishing. The optical connector 2 is obtained through the above processes.

Effects obtained by the optical connector 2, the optical connection assembly 1, and the method of manufacturing the optical connector 2 according to the embodiment will be described together with a problem of a comparative example.

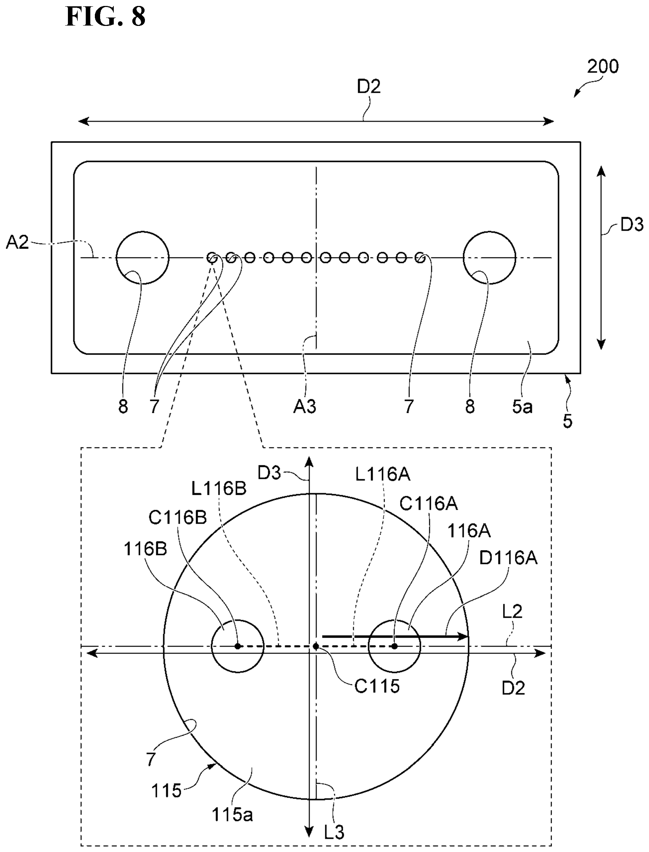

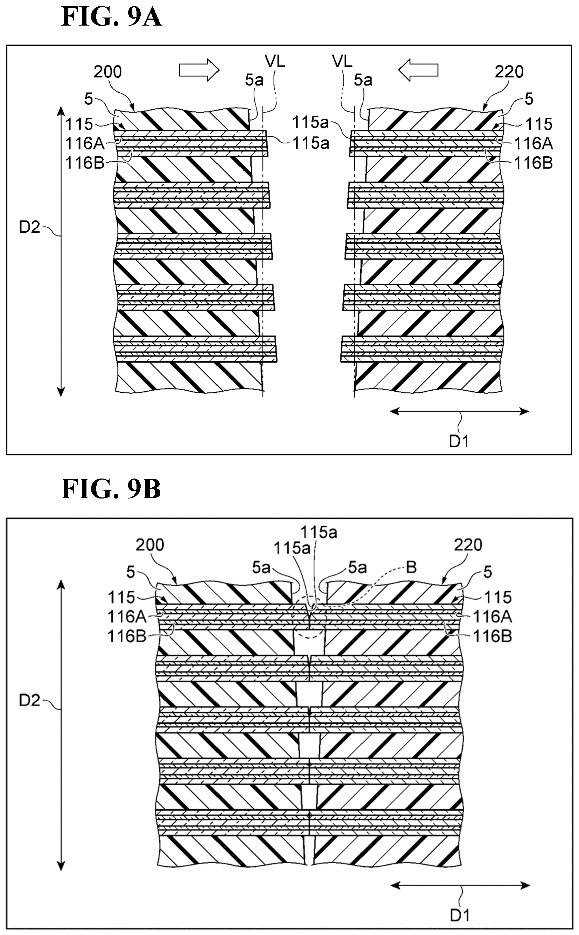

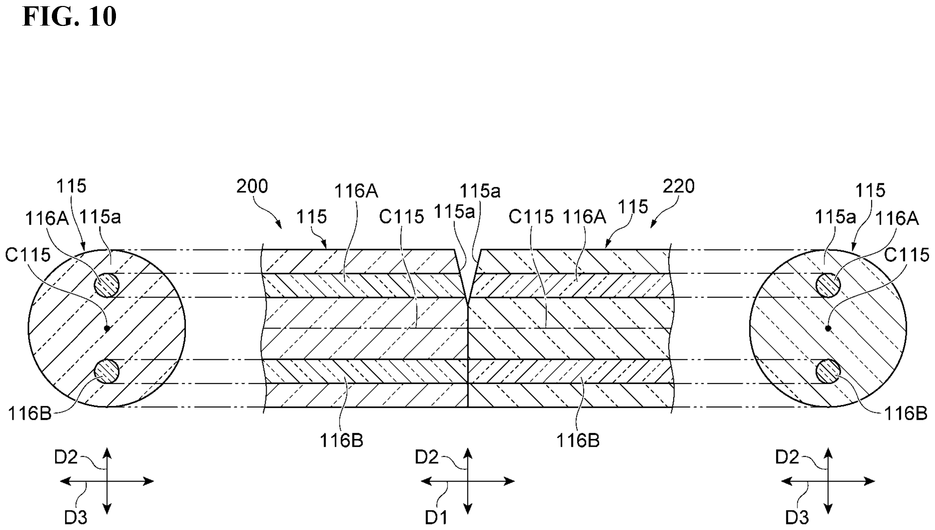

FIG. 8 is a front view showing an optical connector 200 according to a comparative example. FIGS. 9A and 9B are cross-sectional views for explaining a problem of the optical connector 200. FIG. 10 is a cross-sectional view showing a portion B of (b) of FIG. 9 in an enlarged manner. As shown in FIG. 8, in the optical connector 200, centers C116A, C116B of cores 116A, 116B of an optical fiber 115 held by the ferrule 5 are disposed on the first straight line L2. That is, both a straight line L116A connecting a center axis C115 and the center C116A of the core 116A and a straight line L116B connecting the center axis C115 and the center C116B of the core 116B are parallel to the longitudinal direction D2 and coincide with the first straight line L2.

Each of FIGS. 9A and 9B shows a state when connecting the optical connector 200 to a connection counterpart optical connector 220. As a result of polishing the ferrule end surface 5a, the ferrule end surface 5a and each of the fiber end faces 115a may be greatly shifted from the ideal state. For example, when the ferrule end surface 5a is subjected to the angled polishing so as to be inclined with respect to the lateral direction D3, it is ideal that the ferrule end surface 5a is not inclined with respect to the longitudinal direction D2 but is parallel to the longitudinal direction D2. That is, in a cross section along the longitudinal direction D2 and the axial direction D1 (see FIG. 9A), a state in which the ferrule end surface 5a is along an ideal straight line VL along the longitudinal direction D2 is the ideal state.

In the polishing, since a proceed range of the ferrule end surface 5a in the longitudinal direction D2 is larger than the proceed range of the ferrule end surface 5a in the lateral direction D3, the ferrule end surface 5a is likely to be greatly shifted from the ideal state due to a polishing error at the position of the ferrule end surface 5a along the longitudinal direction D2. That is, as shown in FIG. 9A, in the cross section along the longitudinal direction D2 and the axial direction D1, the ferrule end surface 5a is not along the ideal straight line VL along the longitudinal direction D2, and is likely to be inclined from the ideal straight line VL. As a result, position deviation of the ferrule end surface 5a with respect to the ideal straight line VL becomes larger toward an end portion of the ferrule end surface 5a in the longitudinal direction D2, and a large positional deviation is likely to occur on the fiber end face 115a of each of the optical fibers 115 polished simultaneously with the ferrule end surface 5a. Such a positional deviation similarly occurs when the ferrule end surface 5a is subjected to the right-angled polishing.

Thus, when connecting the optical connectors 200, 220 each having the ferrule end surface 5a and the fiber end faces 115a that are greatly inclined in the longitudinal direction D2 due to the polishing error, a distance between the ferrule end surfaces 5a facing each other, that is, a distance between the fiber end faces 115a, 115a facing each other, may increase toward the end portion of the ferrule end surface 5a in the longitudinal direction D2. In this case, as shown in FIG. 9B, when the optical connectors 200, 220 are PC-connected to each other, a large gap may be generated between the fiber end faces 115a, 115a. When such a gap is generated, as shown in FIG. 10, even when the optical connector 200 is pressed to be PC-connected to the connection counterpart optical connector 220, it may be difficult to bring the fiber end faces 115a, 115a into complete contact with each other.

As a result, the fiber end face 115a has a region that is likely to come into contact with a connection counterpart fiber end face 115a and a region that is unlikely to come into contact with the connection counterpart fiber end face 115a. The region that is unlikely to come into contact with the connection counterpart fiber end face 115a is likely to occur at a position on the first straight line L2 and away from the center axis C115. Thus, in a case where the core 116A is defined as the outermost core 116A farthest from the center axis C115, when the outermost core 116A is disposed on the first straight line L2, the outermost core 116A is likely to be disposed in a region where the outermost core 116A is unlikely to come into contact with the connection counterpart fiber end face 115a, and thus the outermost core 116A is disposed at a position where the outermost core 116A is unlikely to come into contact with the outermost core 116A of the connection counterpart fiber end face 115a.

Thus, even when the optical connector 200 is pressed to be PC-connected to the connection counterpart optical connector 220, the outermost core 116A cannot be brought into contact with the outermost core 116A of the connection counterpart fiber end face 115a, and a gap may be generated between the outermost cores 116A. When such a gap is generated, connection loss between the optical connectors 200, 220 may increase. If the optical connectors 200, 220 are pressed against each other so as to fill the gap between the cores 116A, 116A, the optical fibers 115 themselves may be deformed significantly, and it may be difficult to achieve the PC connection between the optical connectors 200, 220.

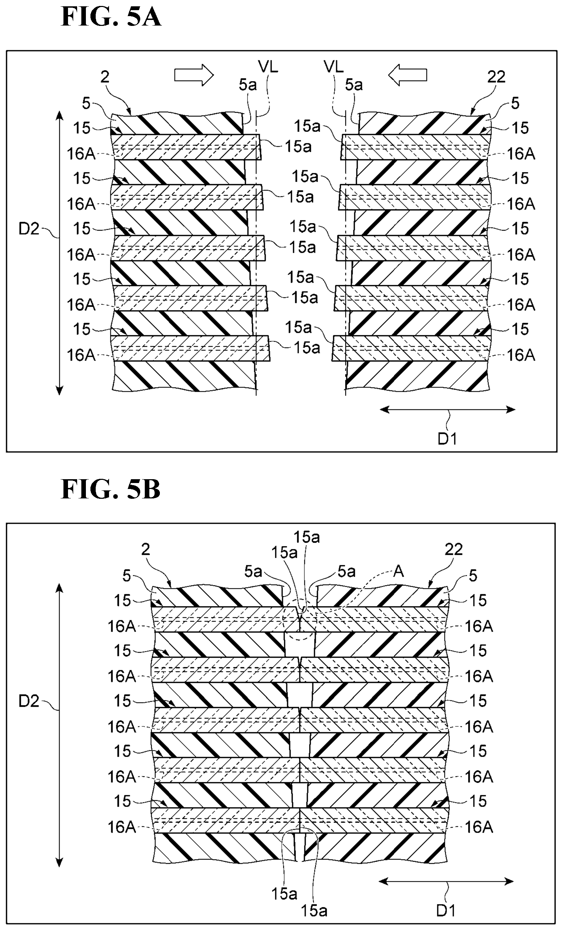

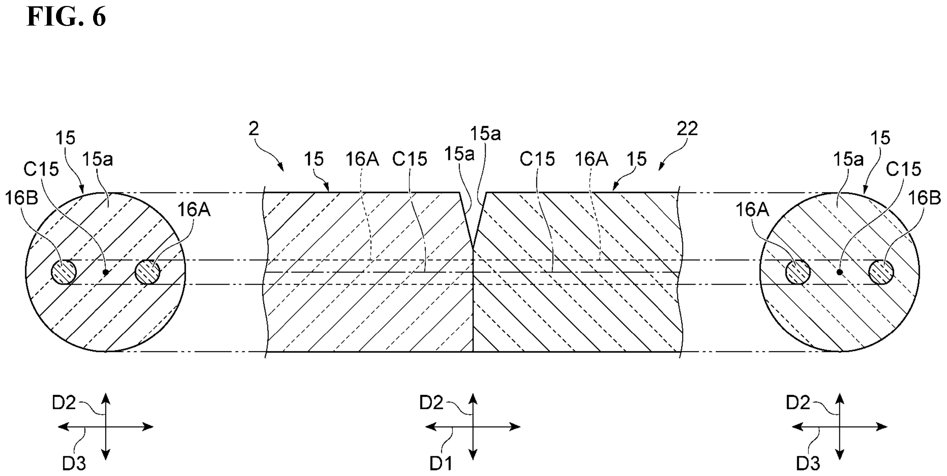

FIGS. 5A and 5B are cross-sectional views for explaining effects of the optical connector 2 according to the embodiment. FIG. 6 is a cross-sectional view showing a portion A of FIG. 5B in an enlarged manner. In the optical connector 2 according to the embodiment, the outermost core 16A, which is disposed at the position farthest from the center axis C15 among the cores 16A, 16B of the optical fiber 15, is disposed at the position shifted from the first straight line L2 (see FIG. 3). In this case, even when the ferrule end surface 5a is shifted from the ideal straight line VL along the longitudinal direction D2 due to the polishing error, it is possible to reduce the outermost core 16A being disposed in a region where the outermost core 16A is unlikely to come into contact with the connection counterpart fiber end face 15a. That is, as shown in FIG. 6, the outermost core 16A can be disposed in a region close to the center axis C15 of the optical fiber 15 where the outermost core 16A is likely to come into contact with the connection counterpart fiber end face 15a, instead of a region close to an outer periphery of the optical fiber 15 where the outermost core 16A is unlikely to come into contact with the connection counterpart fiber end face 15a. As a result, even when a large gap is generated between the fiber end faces 15a, 15a due to the polishing error, it is possible to reduce the difficulty in bringing the outermost cores 16A, 16A into direct contact with each other. As a result, an increase in connection loss between the optical connectors 2, 22 can be reduced.

As in the embodiment, the optical connector 2 may include the plurality of optical fibers 15 arranged along the first straight line L2, and the ferrule 5 may include the plurality of through holes 7 into which the plurality of optical fibers 15 are inserted. In this manner, when the plurality of optical fibers 15 are arranged along the first straight line L2, the cores 16A, 16B of the optical fibers 15 are likely to be disposed on the first straight line L2 that is likely to be affected by the polishing error. In contrast, in the embodiment, as described above, the cores 16A, 16B of the optical fiber 15 are disposed at positions shifted from the first straight line L2, and thus the above-described effect can be effectively achieved.

As in the embodiment, the optical fiber 15 may be a multi-core fiber including the cores 16A, 16B. In this case, the cores 16A, 16B of the optical fiber 15 are likely to be disposed on the first straight line L2 that is likely to be affected by the polishing error. In contrast, in the embodiment, as described above, the 16A, 16B of the optical fiber 15 are disposed at positions shifted from the first straight line L2, and thus the above-described effect can be effectively achieved.

As in the embodiment, when the ferrule end surface 5a is viewed along the axial direction D1, that is, on the fiber end face 15a, the centers C16A, C16B of all the cores 16A, 16B including the outermost core 16A may be disposed at positions shifted from the first straight line L2. In this case, all the cores 16A, 16B can be disposed at positions shifted from the first straight line L2 which likely to be affected by the polishing error. Thus, even when the polishing error occurs, it is possible to more effectively reduce the difficulty in bringing the cores into direct contact with each other when the optical connector 2 is connected to the connection counterpart optical connector 22. As a result, it is possible to more effectively reduce an increase in connection loss between the optical connectors 2, 22.

As in the embodiment, when the ferrule end surface 5a is viewed along the axial direction D1, that is, on the fiber end face 15a, all the cores 16A, 16B of the optical fiber 15 including the outermost core 16A may be arranged point-symmetrically with respect to the center axis C15. If the cores 16A, 16B of the optical fiber 15 are arranged asymmetrically with respect to the center axis C15, when the rotational position of the optical fiber 15 is adjusted such that the outermost core 16A is disposed at the position shifted from the first straight line L2, it is assumed that the core 16B on the opposite side of the outermost core 16A is extremely close to the first straight line L2 that is likely to be affected by the polishing error. In contrast, in the case where the cores 16A, 16B are arranged symmetrically with respect to the center axis C15 as in the embodiment, it is possible to reduce the possibility that the core 16B on the opposite side of the outermost core 16A is extremely close to the first straight line L2 when the rotational position of the optical fiber 15 is adjusted. Thus, even when the polishing error occurs, it is possible to more effectively reduce the difficulty in bringing the cores into direct contact with each other when the optical connector 2 is connected to the connection counterpart optical connector 22. As a result, it is possible to more effectively reduce an increase in connection loss between the optical connectors 2, 22.

As in the embodiment, when the ferrule end surface 5a is viewed along the axial direction D1, that is, on the fiber end face 15a, the center C16A of the outermost core 16A may be disposed at the position closer to the second straight line L3 than to the first straight line L2 in the rotation direction D4 about the center axis C15 as a center when the second straight line L3 passing through the center axis C15 and parallel to the lateral direction D3 is drawn. In this case, the outermost core 16A can be disposed at a position that is unlikely to be affected by the polishing error, and thus, the cores can be easily brought into direct contact with each other when the optical connector 2 is connected to the connection counterpart optical connector 22. As a result, it is possible to more effectively reduce an increase in connection loss between the optical connectors 2, 22.

The optical connector, the optical connection assembly, and the method of manufacturing the optical connector of the present disclosure are not limited to the above-described embodiments, and various other modifications are possible.

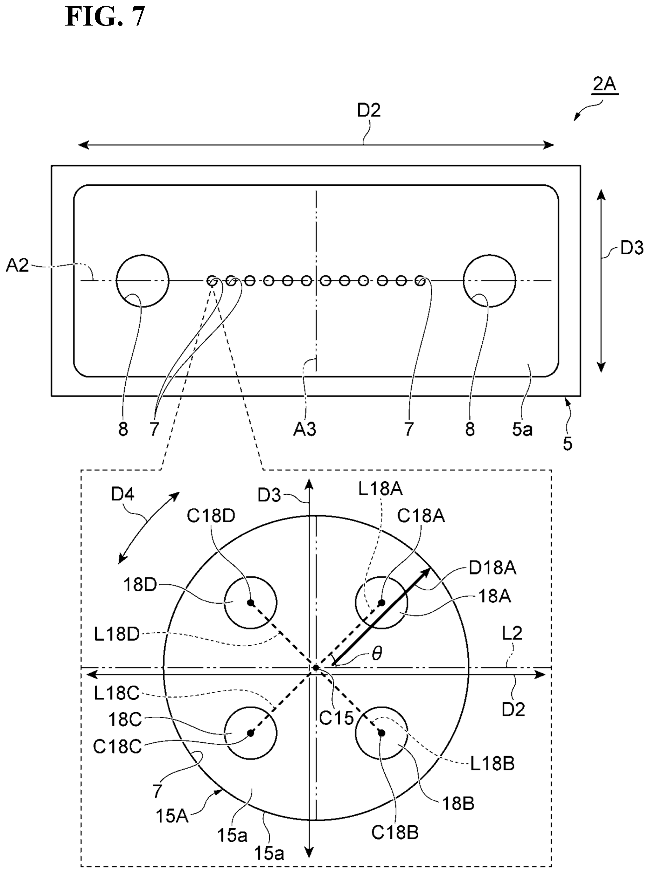

FIG. 7 is a front view showing an optical connector 2A according to a modification. As shown in FIG. 7, the optical connector 2A includes an optical fiber 15A having four cores 18A, 18B, 18C, 18D. The cores 18A, 18B, 18C, 18D are disposed at positions shifted from the center axis C15 of the optical fiber 15A, and are arranged point-symmetrically with respect to the center axis C15, for example. The cores 18A, 18B, 18C, and 18D are arranged at positions at equal distances from the center axis C15 on the fiber end face 15a. Thus, any of the cores 18A, 18B, 18C, 18D may be defined as the "outermost core" farthest from the center axis C15. Here, for convenience, the core 18A, which is one of the four cores 18A, 18B, 18C, 18D, is defined as the "outermost core", and the "core 18A" is replaced with the "outermost core 18A" in the following description as necessary.

From the viewpoint of clarifying the corresponding relationship between the four cores 18A, 18B, 18C, 18D and the four cores of the connection counterpart optical connector, the first core of the four cores 18A, 18B, 18C, 18D may be disposed so as to be intentionally shifted from the position symmetrical with respect to the second to fourth cores. In this case, the first core corresponds to the "outermost core" disposed at the position farther from the center axis C15 than the second to fourth cores.

As shown in FIG. 7, when the ferrule end surface 5a is viewed along the axial direction D1, that is, on the fiber end face 15a, a center C18A of the outermost core 18A is disposed at the position shifted from the first straight line L2. Thus, when the ferrule end surface 5a is viewed along the axial direction D1, when a straight line L18A connecting the center C18A of the outermost core 18A and the center axis C15 is drawn, the straight line L18A represented by a dotted line does not coincide with the first straight line L2, but intersects the first straight line L2. That is, when a direction in which the straight line L18A extends is defined as an outermost core direction D18A, the outermost core direction D18A is not parallel to the longitudinal direction D2 but intersects the longitudinal direction D2.

When the ferrule end surface 5a is viewed along the axial direction D1, that is, on the fiber end face 15a, the center C18A of the outermost core 18A is disposed, for example, between the first straight line L2 and the second straight line L3 in the rotation direction D4 about the center axis C15 as the center when the second straight line L3 passing through the center axis C15 and parallel to the lateral direction D3 is drawn. When an angle of the straight line L18A around the center axis C15 with respect to the first straight line L2 is defined as a rotation angle θ, the rotation angle θ is, for example, 45 degrees. In this manner, the straight line L18A is not parallel to the first straight line L2, but is inclined with respect to both the first straight line L2 and the second straight line L3, for example.

In the optical connector 2A, when the ferrule end surface 5a is viewed along the axial direction D1, that is, on the fiber end face 15a, the centers C18A, C18B, C18C, C18D of all the cores 18A, 18B, 18C, 18D of the optical fiber 15A including the outermost core 18A are disposed at positions shifted from the first straight line L2. That is, a straight line L18B connecting the center axis C15 and the center C18B of the core 18B, a straight line L18C connecting the center axis C15 and the center C18C of the core 18C, and a straight line L18D connecting the center axis C15 and the center C18D of the core 18D do not coincide with the first straight line L2 but intersect the first straight line L2, similarly to the straight line L18A. Thus, the straight lines L18B, L18C, L18D are not parallel to the first straight line L2, and are inclined with respect to both the first straight line L2 and the second straight line L3, for example.

In the optical connector 2A, the outermost core 18A can be disposed in the region close to the center axis C15 of the optical fiber 15 where the outermost core 18A is likely to come into contact with the connection counterpart fiber end face 15a, as compared with a case where the outermost core 18A is disposed on the first straight line L2. As a result, even when a large gap is generated between the fiber end faces 15a, 15a due to the polishing error, it is possible to reduce the difficulty in bringing the outermost cores 18A, 18A into direct contact with each other. As a result, an increase in connection loss between the optical connectors 2, 22 can be reduced.

In the above-described embodiment, the case where the centers of all the cores included in the optical fiber are disposed at positions shifted from the first straight line has been described. However, the center of the core disposed at a position closer to the center axis than to the outermost core may be disposed on the first straight line. In the above-described embodiment, the case where the cores of the optical fiber are arranged line-symmetrically or point-symmetrically with respect to the center axis has been described. However, the cores of the optical fiber may be arranged a non-line-symmetrically or non-point-symmetrically with respect to the center axis. The optical fiber may have a center core disposed on the center axis in addition to peripheral cores disposed at positions shifted from the center axis. In the above-described embodiment, the "multi-core fiber" (optical fiber 15) is shown as an example of the "optical waveguide member". However, instead of the multi-core fiber, a "bundle fiber" in which a plurality of single-core fibers are bundled may be used as the "optical waveguide member". In the above-described embodiment, the case where the optical waveguide member has a plurality of cores has been described. However, the optical waveguide member may have one core. When one core is the outermost core, effects similar to those in the case where the optical waveguide member has a plurality of cores can be obtained.

As can be understood from the description of the above embodiments, the present specification includes the disclosure of the following aspects.

### (Supplementary Note 1)

An optical connector including:
an optical connector ferrule including a ferrule end surface and at least one through hole extending from the ferrule end surface; and
at least one optical waveguide member including a distal end surface exposed from the ferrule end surface and at least one core exposed from the distal end surface, the at least one optical waveguide member being held by the optical connector ferrule in a state of being inserted into the at least one through hole,
wherein the ferrule end surface has a shape having a major axis and a minor axis,
wherein the at least one core is disposed at a position shifted from a center axis of the optical waveguide member,
wherein the at least one core includes an outermost core disposed at a position farthest from the center axis, and
wherein, on the distal end surface, a center of the outermost core is disposed at a position shifted from a major axis line when the major axis line passing through the center axis and extending along the major axis is drawn.

### REFERENCE SIGNS LIST

1 optical connection assembly
2, 2A optical connector (first optical connector)
5 ferrule (optical connector ferrule)
5a ferrule end surface
5b rear end surface
6 introduction opening
7 through hole
8 guiding hole
12 outer sheath
13 optical fiber core wire
15, 15A optical fiber (optical waveguide member)
15a fiber end face (distal end surface)
16A, 16B, 18A, 18B, 18C, 18D core
17 cladding
22 optical connector (second optical connector)
115 optical fiber
115a fiber end face
116A, 116B core
200, 220 optical connector
A2 first center line (major axis)
A3 second center line (minor axis)
C15 center axis
C16A, C16B, C18A, C18B, C18C, C18D, C116A, C116B center
D1 axial direction
D2 longitudinal direction
D3 lateral direction
D4 rotation direction
D16A, D18A outermost core direction
L2 first straight line (major axis line)
L3 second straight line (minor axis line)
L16A, L16B, L18A, L18B, L18C, L18D, L116A, L116B straight line
VL ideal straight line
θ rotation angle

## Claims

1. An optical connector comprising:
an optical connector ferrule including a ferrule end surface and at least one through hole extending from the ferrule end surface; and
at least one optical waveguide member including a distal end surface exposed at the ferrule end surface and a plurality of cores exposed at the distal end surface, the at least one optical waveguide member being held by the optical connector ferrule in a state of being inserted into the at least one through hole,
wherein the ferrule end surface has a shape having a first center line and a second center line that has a length shorter than a length of the first center line,
wherein each of the plurality of cores is disposed at a position shifted from a center axis of the optical waveguide member,
wherein the plurality of cores includes an outermost core disposed at a position farthest from the center axis, and
wherein, on the distal end surface, a center of the outermost core is disposed at a position shifted from a first straight line when the first straight line passing through the center axis and parallel to the first center line is drawn.

2. The optical connector according to claim 1,
wherein the at least one optical waveguide member includes a plurality of optical waveguide members, each of the plurality of optical waveguide members having the distal end surface arranged along the first straight line, and
wherein the at least one through hole includes a plurality of through holes, and the optical connector ferrule includes the plurality of through holes into which the plurality of optical waveguide members is inserted.

3. The optical connector according to claim 1 or 2,
wherein the at least one optical waveguide member is a multi-core fiber including the plurality of cores.

4. The optical connector according to claim 3,
wherein, on the distal end surface, centers of all the cores of the at least one optical waveguide member are disposed at positions shifted from the first straight line.

5. The optical connector according to claim 4,
wherein on the distal end surface, all the cores of the at least one optical waveguide member are arranged point-symmetrically with respect to the center axis.

6. The optical connector according to any one of claims 1 to 5,
wherein, on the distal end surface, the center of the outermost core is disposed at a position closer to a second straight line than to the first straight line in a rotation direction about the center axis as a center when the second straight line passing through the center axis and parallel to the second center line is drawn.

7. An optical connection assembly comprising:
a first optical connector and a second optical connector, each being the optical connector according to any one of claims 1 to 6,
wherein the ferrule end surface of the first optical connector faces the ferrule end surface of the second optical connector in a direction in which the center axis extends.

8. A method of manufacturing an optical connector, comprising:
preparing an optical connector ferrule including a ferrule end surface and at least one through hole extending from the ferrule end surface, and preparing an optical waveguide member including a distal end surface and a plurality of cores exposed at the distal end surface;
inserting the optical waveguide member into the at least one through hole such that the distal end surface is exposed at the ferrule end surface;
adjusting a rotational position of the optical waveguide member around a center axis of the optical waveguide member after the optical waveguide member is inserted into the at least one through hole; and
polishing the ferrule end surface and the distal end surface after the rotational position of the optical waveguide member is determined,
wherein the ferrule end surface has a shape having a first center line and a second center line that has a length shorter than a length of the first center line,
wherein each of the plurality of cores is disposed at a position shifted from the center axis,
wherein the plurality of cores includes an outermost core disposed at a position farthest from the center axis, and
wherein, in the adjusting the rotational position of the optical waveguide member, on the distal end surface, the rotational position of the optical waveguide member around the center axis is determined such that a center of the outermost core is disposed at a position shifted from a first straight line when the first straight line passing through the center axis and parallel to the first center line is drawn.
